**Europäisches Patentamt**

**European Patent Office**

**Office européen des brevets**

(19)

(11) Publication number: **0 144 300**
**A2**

## (12) EUROPEAN PATENT APPLICATION

(21) Application number: **84850361.1**

(22) Date of filing: **22.11.84**

(51) Int. Cl.⁴: **A 01 G 31/02**
**A 01 G 9/10**

(30) Priority: **24.11.83 SE 8306494**

(43) Date of publication of application:
**12.06.85 Bulletin 85/24**

(84) Designated Contracting States:
**AT BE CH DE FR GB IT LI LU NL SE**

(71) Applicant: **GULLFIBER AB**
**Fack**
**S-260 50 Billesholm(SE)**

(72) Inventor: **Björklund, Leif Erik**
**Hudiksvallsgatan 7**
**S-252 51 Helsingborg(SE)**

(74) Representative: **Onn, Thorsten et al,**
**AB STOCKHOLMS PATENTBYRA Box 3129**
**S-103 62 Stockholm(SE)**

(54) **Bed for cultivation purposes.**

(57) A porous, soft bed of mineral wool intended for cultivation purposes and preferably having the form of a disc (10) or mat. It can for example consist of rockwool, measures being taken so that the bed is easily moistened by water. Recesses (12) are made in connection with at least one of the two main surfaces of the bed for accumulating and spreading a wetting agent (18). The recesses can for example have the shape of round holes or slots, which are uniformly distributed across one main surface of the mineral wool bed. A plurality of bed discs (10) or mineral wool can form a package, the discs being piled on top of one another so that the recesses (12) in a first disc are closed by a second disc facing said recesses.

EP 0 144 300 A2

0144300

## Bed for cultivation purposes

This invention relates to a porous, soft bed of mineral wool intended for cultivation purposes, preferably in the form of a disc or mat, which for example consists of rockwool, such measures being taken that the bed is easily moistened by water.

A mineral wool bed of said kind is above all intended to be a substrate for cultivation in greenhouses but can of course also be used in free earth both at sowing of seed and setting of plants. The mineral wool bed can also be utilized as a medium for forcing plants in pots quite without earth and in freely planted cultures. Moreover, the mineral wool bed can be used as suction bed, where it is a substrate of cultures forced in pots or the like, in which the suction bed serves to distribute water and nutritive.

Normally mineral wool discs of the type insulating discs should be water-repellent to function as advantageously as possible, water not penetrating into the product but running off its surface directly. When using mineral wool beds intended for cultivation purposes and produced substantially according to the principle for manufacture of insulating discs it is known to exclude in the manufacturing process additives in the form of oil which should else make the product water-repellent. Instead a wetting agent is added in the manufacturing process in a conventional way to the binding agent used. In this way the wetting agent will be satisfactorily spread in the product and remains therein also after hardening.

It is now the object of the invention to provide a new type of mineral wool bed, the wetting agent being added to the product at a considerably later stage of the manufacture so that the wetting agent can be utilized in a more efficient way than earlier in a time phase more close to the very moistening process. In this way it will be possible to store the mineral wool beds free of wetting agents for a long time and to add the wetting agent in a direct connection with the beds being packed and distributed. According to the invention this is made possible in that special recesses for accumulation and spreading of wetting agents are made in connection with at least one of the two main surfaces of the mineral wool bed. The recesses are preferably uniformly distributed across said main surface for a substantially uniform distribution of the wetting agent in the whole mineral wool bed. Sowing of seed and planting can be simplified by said recesses which may serve as natural sowing and planting places.

It has been found suitable to have a stock of packages comprising a plurality of specially dimensioned mineral wool beds for distribution to salesmen and customers, said beds being so piled upon each other that the recesses in a first disc are closed by a second disc facing said recesses and that the pile of discs thus formed is arranged to be held together by a binding means. The latter preferably consists of a shrunk-on plastic foil.

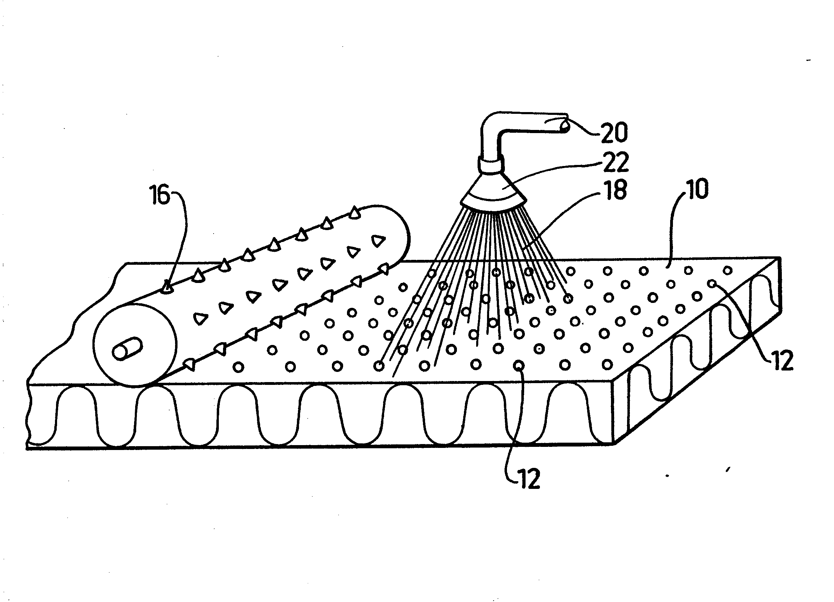

The invention will now be described more in detail below in the form of a preferred illustrative example with reference to the enclosed drawing comprising one single Figure, which illustrates in a perspective view a preferred embodiment of a mineral wool bed of the intended kind, in the upper surface of which recesses are made by means of a so-called spiked roller, a wetting agent being applied via a conventional spray nozzle.

The mineral wool disc 10 illustrated in the Figure can have a thickness of approx. 75 mm, but this value is of course by no means critical. The width and length of the disc can be chosen as desired but the width can advantageously be 200 or 300 mm and the length 1200 mm. The disc is manufactured from porous, soft rockwool thanks to which plant roots can easily absorb nutrient solution from the bed. Besides, this has a very strong structure allowing that it lasts for a whole culture season. This will create possibilities for the roots to get a good hold.

At the upper side of the mineral wool bed 10 there is in the preferred embodiment a great number of similar recesses 12, which are uniformly distributed. Their number should be between 100 and 10.000 per $m^2$ mineral wool bed and they should have an orifice width of between 50 and 1800 mm and a depth of between 50 and 250 mm.

0144300

On the drawing there is also shown a spiked roller 14, from the peripheral surface of which a great number of sharp spikes 16 project. This roller 14 is used to make said recesses 12 but this step of manufacture can of course be quite separated from the manufacture of the very disc or mat. A wetting agent 18 is applied via a pressure line 20 and a nozzle 22 in a direct connection with the step of producing the recesses 12 or, as an alternative, in a later stage. At spraying the wetting agent 18 will be accumulated in the recesses 12. It will then gradually be uniformly distributed in the product.

The form of the recesses 12 is of course not critical, either, but can be modified in many different manners. Thus, it is of course also possible to use instead of the round holes shown on the drawing longitudinal and/or transversal notches extending between opposite edges of the mineral wool bed. These notches can then preferably be created by using some sawing method.

In manufacture of the new mineral wool disc 10 it has been found possible to utilize small pieces, i.a. edge wastage, of previously produced mineral wool discs, which will make it possible to keep down the price of the finished mineral wool product.

Modifications of the cultivation bed described above can of course be made within the scope of the invention, as presented in the claims.

Patent Claims                                      **0144300**

1. A porous, soft bed of mineral wool intended for cultivation purposes, preferably in the form of a disc (10) or mat, which for instance consists of rockwool, such measures being taken that the bed is easily moistened by water, c h a r a c t e r i z e d  in that recesses (12) for accumulating and spreading wetting agents (18) are made in connection with at least one of the two main surfaces of the bed.

2. The mineral wool bed of claim 1, c h a r a c t e r i z e d  in that the recesses (12) are uniformly distributed across said main surface for substantially uniform distribution of the wetting agent (18) in the whole mineral wool bed.

3. The mineral wool bed of any one of claims 1 and 2, c h a r a c t e r i z e d  in that the recesses (12) have an orifice width of between 50 and 1800 mm and a depth of between 50 and 250 mm.

4. The mineral wool bed of claim 3, c h a r a c t e r i z e d  in that the recesses (12) occur in a number of between 100 and 10.000 per $m^2$ of mineral wool bed.

5. A package comprising a plurality of mineral wool beds as claimed in any one of claims 1 and 2, c h a r a c t e r i z e d  in that several bed discs (10) of mineral wool are so piled on top of one another that the recesses (12) in a first disc will be closed by a second disc facing said recesses and that the pile of discs thus formed is arranged to be held together by a binding means.

6. The package of claim 5, c h a r a c t e r i z e d  in that the binding means consists of a shrunk-on plastic foil.